# EUROPEAN PATENT APPLICATION

(11) **EP 2 292 904 A2**
(43) Date of publication of application: **09.03.2011**
(21) Application number: 10172512.5
(22) Date of filing: 11.08.2010
(51) Int. Cl.: F01N 3/035, F01N 3/20, B01D 53/94

(54) **Exhaust gas purification apparatus**

(30) Priority: 02.09.2009 JP 2009202825
(71) Applicant: Kabushiki Kaisha Toyota Jidoshokki, Kariya-shi, Aichi 448-8671 (JP)
(72) Inventor: Kato, Yoshifumi, Kariya-shi Aichi 448-8671 (JP)
(74) Representative: TBK-Patent

(57) **Abstract**

The exhaust gas purification apparatus (101,102,103) includes an oxidation catalyst (12), a first selective catalytic reduction catalyst (15S,25S,35S), a second selective catalytic reduction catalyst (16S,36S) and a urea water supply device (19,29,39). The oxidation catalyst is provided in a passage through which exhaust gas flows. The first selective catalytic reduction catalyst is located in the passage downstream of the oxidation catalyst. The second selective catalytic reduction catalyst is located in the passage downstream of the first selective catalytic reduction catalyst and operable to adsorb more ammonia than the first selective catalytic reduction reduction catalyst. The urea water supply device is provided for supplying urea water to the passage upstream of the first selective catalytic reduction catalyst.

## Description

### BACKGROUND OF THE INVENTION

The present invention relates to an exhaust gas purification apparatus and more particularly to an exhaust gas purification apparatus that purifies exhaust gas by removing nitrogen oxides (NO_{X}) contained in the exhaust gas of a diesel engine with the aid of a urea selective catalytic reduction (SCR) catalyst.

A urea SCR system has been developed to purify exhaust gas by removing NO_{X} contained in the exhaust gas of a diesel engine. The urea SCR system uses an SCR catalyst as a selective reduction catalyst to convert NO_{X} into nitrogen (N₂) and water (H₂O) by the chemical reaction between NO_{X} and ammonia (NH₃) produced by hydrolyzing urea water.

The SCR catalyst of the urea SCR system is provided in the exhaust gas passage formed between an engine and a muffler that is located downstream of the engine with respect to the flow of exhaust gas. An oxidation catalyst is provided in the exhaust gas passage at a position upstream of the SCR catalyst with respect to the flow of exhaust gas for promoting oxidization of hydrocarbons (HC) and carbon monoxide (CO) in exhaust gas to water (H₂O) and carbon dioxide (CO₂) and also for promoting oxidization of nitrogen monoxide (NO) in exhaust gas to nitrogen dioxide (NO₂). An injection valve is also provided upstream of the SCR catalyst for injecting urea water into exhaust gas. Additionally, a diesel particulate filter (DPF) is provided in the exhaust gas passage for reducing particulate matter (PM), such as carbon contained in exhaust gas.

Japanese Patent Application Publication 2006-274986 discloses an exhaust gas aftertreatment apparatus including an NO_{X} storage catalyst activated under a high temperature, a DPF located downstream of the NO_{X} storage catalyst with respect to the flow of exhaust gas and having a urea SCR catalyst supported therein and activated under a low temperature, and a urea water injector located between the NO_{X} storage catalyst and the DPF, all of which are housed in one case of the exhaust gas aftertreatment apparatus. In this exhaust gas aftertreatment apparatus, when NO_{X} storage catalyst is under a low temperature below 400 degrees centigrade (°C), urea water is injected into exhaust gas by the urea water injector and hydrolyzed thereby to produce ammonia, which reduces and removes NO_{X} contained in exhaust gas by the aid of the urea SCR catalyst. When NO_{X} storage catalyst is under a high temperature that is 400 °C or higher, NO_{X} contained in exhaust gas is stored by the NO_{X} storage catalyst and exhaust gas is purified, accordingly.

In the exhaust gas aftertreatment apparatus, however, all of the ammonia produced by hydrolyzing urea water injected by the urea water injector is not used to reduce NO_{X} contained in exhaust gas by the aid of the urea SCR catalyst. For example, if the amount of ammonia produced from urea water is large relative to the amount of NO_{X} contained in exhaust gas due to a large amount of urea water injected by the urea water injector, a surplus amount of ammonia is produced and discharged from the urea SCR catalyst. Such surplus ammonia deteriorates the efficiency of exhaust gas purification relative to urea water usage. Consequently, the above-described exhaust gas aftertreatment apparatus accomplishes purification of exhaust gas by removal of NO_{X} only with a low efficiency relative to urea water usage.

The present invention, which has been made in view of the above problems, is directed to an exhaust gas purification apparatus that improves the efficiency of removing NO_{X} contained in exhaust gas relative to the use of urea water.

### SUMMARY OF THE INVENTION

In accordance with an aspect of the present invention, the exhaust gas purification apparatus includes an oxidation catalyst, a first selective catalytic reduction catalyst, a second selective catalytic reduction catalyst and a urea water supply device. The oxidation catalyst is provided in a passage through which exhaust gas flows. The first selective catalytic reduction catalyst is located in the passage downstream of the oxidation catalyst. The second selective catalytic reduction catalyst is located in the passage downstream of the first selective catalytic reduction catalyst and operable to adsorb more ammonia than the first selective catalytic reduction catalyst. The urea water supply device is provided for supplying urea water to the passage upstream of the first selective catalytic reduction catalyst.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic view showing an exhaust gas purification apparatus according to a first embodiment of the present invention and its peripheral equipment;
Fig. 2 is a longitudinal sectional view showing the exhaust gas purification apparatus of Fig. 1;
Fig. 3 is a cross sectional view showing the exhaust gas purification apparatus as taken along the lines 3A-3A of Fig. 2;
Fig. 4 is a longitudinal sectional view showing an exhaust gas purification apparatus according to a second embodiment of the present invention; and
Fig. 5 is a longitudinal sectional view showing an exhaust gas purification apparatus according to a third embodiment of the present invention.

### DETAILED DESCRIPTION OF THE PREFERRED EMBODIMENTS

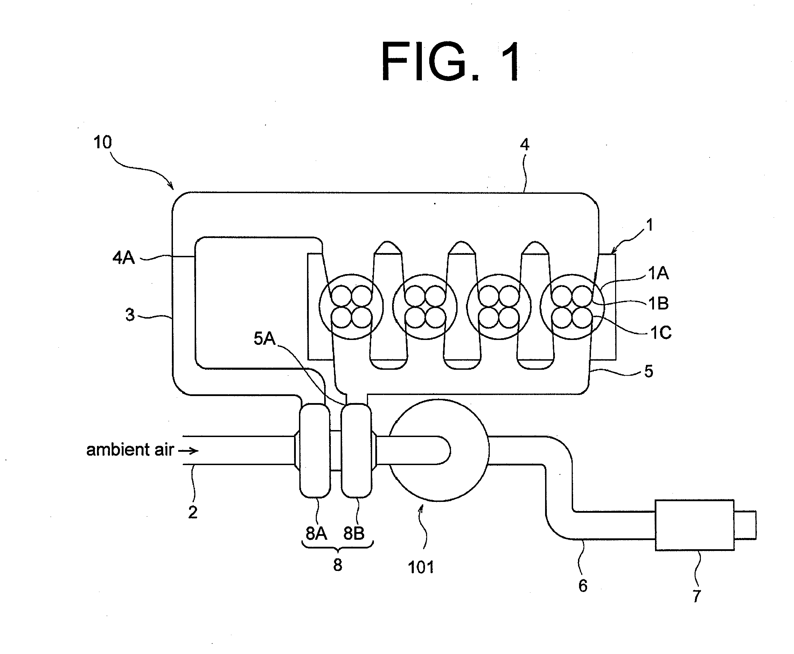

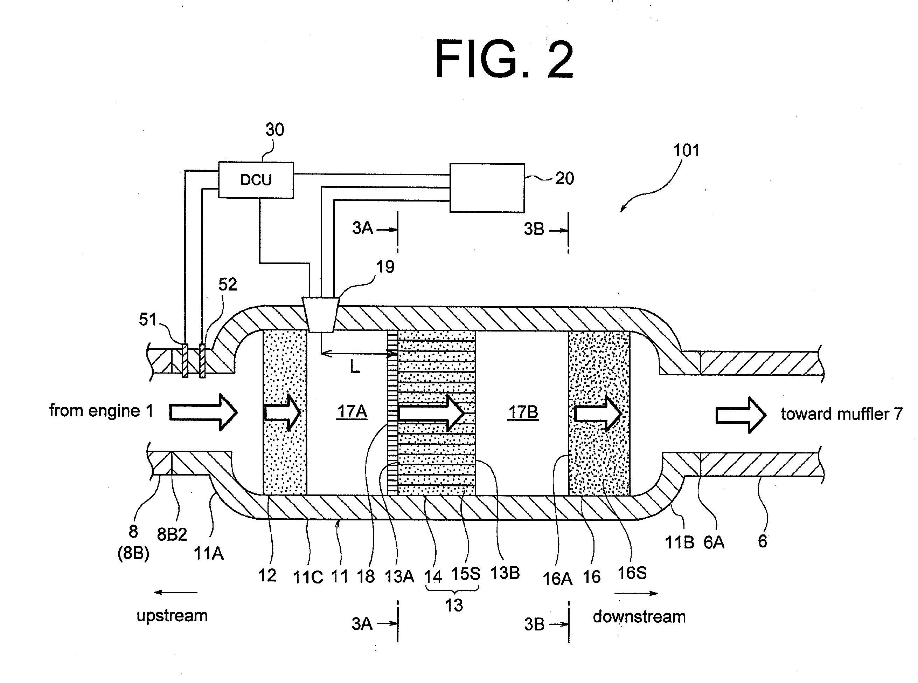

The following will describe the embodiments of the present invention with reference to the accompanying drawings. An exhaust gas purification apparatus 101 according to the first embodiment of the present invention and its peripheral equipment will be described with reference to Figs. 1 and 2. In the following embodiments, the exhaust gas purification apparatus is used for a diesel engine for a vehicle.

Referring to Fig. 1 showing the exhaust gas purification apparatus 101 and its peripheral equipment in schematic view, an engine 1 has a plurality of engine cylinders 1A each having a plurality of intake ports 1 B and a plurality of exhaust ports 1C. An intake manifold 4 is connected to the intake ports 1 B of the engine cylinders 1A for distributing intake air into the respective engine cylinders 1A. The intake manifold 4 has an inlet 4A through which air is drawn in. An engine intake pipe 3 has two opposite ends one of which is connected to the inlet 4A of the intake manifold 4 and the other of which is connected to a compressor housing 8A of the turbocharger 8. An intake pipe 2 is connected to the compressor housing 8A, through which ambient air is drawn in.

An exhaust manifold 5 is connected to the exhaust ports 1C of the engine cylinders 1A for collecting exhaust gas discharged from the exhaust ports 1C. The exhaust manifold 5 has an outlet 5A through which exhaust gas is discharged. A turbine housing 8B of the turbocharger 8 is connected to the outlet 5A of the exhaust manifold 5. The exhaust gas purification apparatus 101 having substantially a cylindrical form is connected to the turbine housing 8B and located on lateral side of the engine 1 at a position adjacent thereto. An exhaust pipe 6 is connected to the exhaust gas purification apparatus 101. A muffler 7 is connected to the downstream end of the exhaust pipe 6. Thus, the intake pipe 2, the turbocharger 8, the engine intake pipe 3 and the intake manifold 4 cooperate to form the inlet system in the vehicle (not shown). The exhaust manifold 5, the turbocharger 8, the exhaust gas purification apparatus 101, the exhaust pipe 6 and the muffler 7 cooperate to form the outlet system in the vehicle (not shown). It is noted that the engine 1, the engine intake pipe 3, the intake manifold 4, the exhaust manifold 5 and the turbocharger 8 cooperate to form an engine assembly 10.

Referring to Fig. 2 showing the exhaust gas purification apparatus 101 in longitudinal sectional view, it has a substantially cylindrical casing 11. The casing 11 has an upstream end portion 11A, a downstream end portion 11B and a cylindrical intermediate portion 11C formed between the upstream end portion 11A and the downstream end portion 11 B. The turbine housing 8B of the turbocharger 8 has an outlet 8B2 that is connected to the upstream end portion 11A of the casing 11. The exhaust pipe 6 has an upstream end 6A that is connected to the downstream end portion 11 B of the casing 11. Thus, the interior of the casing 11 communicates with the interior of the turbine housing 8B and the interior of the exhaust pipe 6.

The casing 11 has therein an oxidation catalyst layer 12, a diesel particulate filter (DPF) body 14 and a second SCR catalyst layer 16, which are located in this order along the flow of exhaust gas. The oxidation catalyst layer 12 supports therein the oxidation catalyst of the present invention. The second SCR catalyst layer 16 supports therein a second SCR catalyst 16S. It is noted that the DPF body 14 serves as the particulate matter collecting device of the present invention. The oxidation catalyst layer 12, the DPF body 14 and the second SCR catalyst layer 16 have such a cylindrical form extending perpendicularly to the axis of the cylindrical portion 11C of the casing 11 that closes the interior of the cylindrical portion 11C as shown in Fig. 2. The oxidation catalyst layer 12 and the DPF body 14 are spaced away from each other and have therebetween a space 17A. The DPF body 14 and the second SCR catalyst layer 16 are also spaced away from each other and have therebetween a space 17B.

The oxidation catalyst layer 12 is formed by a layer in which the oxidation catalyst for promoting the oxidation of hydrocarbons (HC) and carbon monoxide (CO) contained in exhaust gas to water (H₂O) and carbon dioxide (CO₂) and also for promoting the oxidation of nitrogen oxide (NO) contained in exhaust gas to nitrogen dioxide (NO₂) is supported by a substrate (not shown). For example, platinum (Pt), palladium (Pd), rhodium (Rh), silver (Ag), iron (Fe), copper (Cu), nickel (Ni), gold (Au), an alloy of two or more kinds of these catalyst materials and so forth are preferably used as the oxidation catalyst of the oxidation catalyst layer 12.

The DPF body 14 is made of a porous material such as ceramic and used for collecting particulate matter (PM) contained in exhaust gas.

A first SCR catalyst 15S as a selective reduction catalyst is supported by and throughout the DPF body 14 by using any suitable means such as coating. The DPF body 14 and the first SCR catalyst 15S are integrated into a DPF 13 with catalyst. The first SCR catalyst 15S may be supported partially by the DPF body 14. Selective reduction catalyst promotes chemical reaction selectively between specific substances. Urea SCR catalyst (hereinafter referred to merely as SCR catalyst) of the selective reduction catalyst promotes chemical reaction specifically between nitrogen oxide (NO_{X}) and ammonia (NH₃) as a reducing agent, thereby reducing NO_{X} to N₂ (nitrogen) and water.

An SCR catalyst having a low ammonia adsorption property is used for the first SCR catalyst 15S. The ammonia adsorption property may be represented by weight of ammonia adsorption capacity per unit volume of the substrate which supports therein catalyst. Specifically, the low ammonia adsorption property of the first SCR catalyst 15S should preferably be such that, when 180 gram (g) of the first SCR catalyst 15S is supported by one liter of substrate, ammonia of not more than 100 mg (milligram) per liter of substrate may be adsorbed under a temperature of 200°C of the first SCR catalyst 15S. Additionally, the ammonia adsorption capacity of the first SCR catalyst 15S, which tends to decrease with an increase of the temperature of the first SCR catalyst 15S, should preferably be such that the rate of decrease of the ammonia adsorption capacity is low, that is, the dependence of the ammonia adsorption capacity on temperature is low. The first SCR catalyst 15S should preferably be made of an oxide of substance such as zirconium (Zr), titanium (Ti), silicon (Si), cerium (Ce) or tungsten (W), any complex of these oxides, or ZSM-5 zeolite which is partially replaced by metal such as iron (Fe) or copper (Cu) which is thermally treated under a high temperature that is 650°C or higher.

The first SCR catalyst 15S has a property of activating reduction when its temperature is at a predetermined level or higher, generally 150°C or higher. "Activating reduction" means rapidly increasing the rate of reduction of NO_{X} by ammonia. The first SCR catalyst 15S should preferably have low ammonia adsorption capacity when its temperature is 150°C, at which reduction is activated, or higher. The above-mentioned catalyst materials have such property.

The second SCR catalyst layer 16 is formed such that the second SCR catalyst 16S is supported in a substrate (not shown) by any suitable means such as coating. The second SCR catalyst 16S uses an SCR catalyst whose ammonia adsorption property is higher than that of the first SCR catalyst 15S.

Specifically, the ammonia adsorption property of the second SCR catalyst 16S should preferably be such that, when 180 g of the second SCR catalyst 16S per liter of the substrate is supported, ammonia not less than 250 mg per liter (per unit volume) of the substrate may be adsorbed under the temperature of 200°C of the second SCR catalyst 16S. ZSM-5 zeolite which is partially replaced by metal such as iron (Fe) or copper (Cu) which is thermally treated under a temperature lower than 650°C is preferably used as the second SCR catalyst 16S. In addition, the ammonia adsorption capacity of the second SCR catalyst 16S tends to decrease with an increase of the temperature of the second SCR catalyst 16S. The SCR catalyst having the first SCR catalyst 15S and the second SCR catalyst 16S and also having a higher ammonia adsorption capacity has such a characteristic that the rate of decrease of the ammonia adsorption capacity becomes higher with an increase of the temperature of the SCR catalyst, that is, dependence of the ammonia adsorption capacity on temperature becomes higher. Therefore, the second SCR catalyst 16S has higher dependence of the ammonia adsorption capacity on temperature than the first SCR catalyst 15S.

The second SCR catalyst 16S using the above-mentioned catalyst materials has a property of activating reduction when its temperature is 150°C or higher. The ammonia adsorption capacity of the entire second SCR catalyst layer 16 formed as described above is greater than that of the entire DPF 13 having the first SCR catalyst 15S.

The cylindrical portion 11C of the casing 11 is provided with an injection valve 19. The injection valve 19 is provided by an electromagnetic valve and serves as the urea water supply device of the present invention. In addition, the injection valve 19 is connected to a urea water tank 20 mounted on the vehicle (not shown) for injecting urea water supplied from the urea water tank 20 into the space 17A in the casing 11 that is upstream of the first SCR catalyst 15S. As shown in Fig. 2, the injection valve 19 is located at a position that is closer to the oxidation catalyst layer 12 than to the DPF 13 between the oxidation catalyst layer 12 and the DPF 13. Further, the injection valve 19 is electrically connected to a dosing control unit (DCU) 30 which controls the opening and closing operation of the injection valve 19. The urea water tank 20 is provided with a motor pump (not shown) for supplying urea water in the urea water tank 20 to the injection valve 19. The motor pump is electrically connected to the DCU 30, which also controls the operation of the motor pump. The DCU 30 may be provided separately for each of the injection valve 19 and the motor pump of the urea water tank 20. Alternatively, the DCU 30 may be integrated with an ECU of the vehicle (not shown).

The DPF 13 has an upstream end face 13A on which a cylindrical mixer 18 is provided for distributing substances contained in exhaust gas throughout the upstream end face 13A evenly. The mixer disclosed by publication such as Japanese Patent Application Publication No. 6-509020T or No. 2006-9608 may be used as the mixer 18 of the present embodiment. The mixer disclosed by Japanese Patent Application Publication No. 6-509020T is made in the form of a lattice having a number of cells as the gas passage which causes the exhaust gas to swirl in the cells and also to flow toward their adjacent cells, thereby distributing the substances contained in the exhaust gas throughout the gas passage. The mixer disclosed by Japanese Patent Application Publication No. 2006-9608 is provided with a plurality of dispersion plates located perpendicularly to the direction of gas passage for causing the exhaust gas to meander, thereby distributing the substances contained in the exhaust gas throughout the gas passage.

An exhaust-gas temperature sensor 51 is provided in the upstream end portion 11A of the casing 11 for detecting the temperature of exhaust gas. The exhaust-gas temperature sensor 51 is electrically connected to the DCU 30 for sending the detected temperature information to the DCU 30. An NO_{X} sensor 52 is provided in the upstream end portion 11A of the casing 11 at a position downstream of the exhaust-gas temperature sensor 51 for detecting the concentration of NO_{X}. The NO_{X} sensor 52 is electrically connected to the DCU 30 for sending the detected concentration information to the DCU 30. As is now apparent from the forgoing, the exhaust gas purification apparatus 101 has an exhaust gas purification mechanism having an SCR catalyst and an exhaust gas purification mechanism having a DPF integrated together and mounted to the engine assembly 10 adjacently to the engine 1, as shown in Fig. 1.

The following will describe the operation of the exhaust gas purification apparatus 101 and its peripheral equipment with reference to Figs. 1 through 3. Referring firstly to Fig. 1, when the engine 1 is operated, ambient air is drawn into the compressor housing 8A of the turbocharger 8 through the intake pipe 2. The air is pumped by a compressor wheel (not shown) in the compressor housing 8A and sent to the engine intake pipe 3. The air in the engine intake pipe 3 flows into the engine cylinder 1A of the engine 1 via the intake manifold 4. The air in the engine cylinder 1A is mixed with the fuel (light oil) injected into the engine cylinder 1A, and air-fuel mixture in the engine cylinder 1A is ignited spontaneously.

Exhaust gas resulting from the combustion of the air-fuel mixture is discharged through the exhaust ports 1C to the exhaust manifold 5 to be colleted therein. The exhaust gas then flows into the turbine housing 8B of the turbocharger 8. The exhaust gas in the turbine housing 8B is flowed into the exhaust gas purification apparatus 101 while speeding up the turbine wheel (not shown) in the turbine housing 8B and the compressor wheel connected to the turbine wheel. After flowing through the exhaust gas purification apparatus 101, the exhaust gas is discharged out from the vehicle (no shown) via the exhaust pipe 6 and the muffler 7.

Referring to Fig. 2, all the exhaust gas which has flowed into the exhaust gas purification apparatus 101 passes firstly through the oxidation catalyst layer 12. When exhaust gas flows through the oxidation catalyst layer 12, hydrocarbons and carbon monoxide contained in the exhaust gas are oxidized to carbon dioxide and water, while part of nitrogen monoxide contained in the exhaust gas is oxidized to nitrogen dioxide which is reduced more easily than nitrogen monoxide. The exhaust gas which has flowed through the oxidation catalyst layer 12 passes through the space 17A and the mixer 18 and then flows into the DPF 13. The DPF body 14 of the DPF 13 collects PM contained in exhaust gas flowing through the DPF 13.

Simultaneously, the DCU 30 operates the motor pump of the urea water tank 20 and opens the injection valve 19, so that urea water from the urea water tank 20 is injected by the injection valve 19 into the space 17A. The injected urea water is hydrolyzed under the influence of the heat of the exhaust gas flowing through the space 17A thereby to produce ammonia and carbon dioxide. Providing the injection valve 19 in the space 17A at a position adjacent to the oxidation catalyst layer 12, the time for the injected urea water to stay upstream of the DPF 13 before reaching the first SCR catalyst 15S of the DPF 13 is increased. Thus, the reaction time that is taken to hydrolyze the urea water to the ammonia is increased, so that the efficiency of hydrolysis of the urea water is improved. For these reasons, the injection valve 19 should preferably be located at such a position upstream of the DPF 13 and adjacent to the oxidation catalyst layer 12 that the distance from the DPF 13 is as long as possible. Urea water is injected from downstream of the oxidation catalyst layer 12 and hydrolyzed to ammonia, so that no ammonia is oxidized under the influence of the oxidation catalyst layer 12.

Ammonia produced by hydrolyzing urea water in the space 17A passes through the mixer 18 with exhaust gas and is dispersed by the mixer 18 and then flowed into the DPF 13. Ammonia flowed into the DPF 13 with exhaust gas reduces NO_{X} contained in exhaust gas to N₂ to purify exhaust gas by the aid of the first SCR catalyst 15S of the DPF 13.

Although ammonia contained in exhaust gas and passing through the mixer 18 is dispersed by the mixer 18, distribution of ammonia is still uneven in a plane of the exhaust gas purification apparatus 101 that corresponds to the upstream end face 13A of the DPF 13 taken along the line 3A-3A of Fig. 2 and is perpendicular to the center axis of the cylindrical portion 11C of the casing 11. Especially, when the distance L between the outlet of the injection valve 19 and the DPF 13 is short, the rate at which injected urea water is hydrolyzed to ammonia before reaching the DPF 13 decreases, so that the unevenness of distribution of ammonia in the above cross-section plane taken along the line 3A-3A of Fig. 2 is increased.

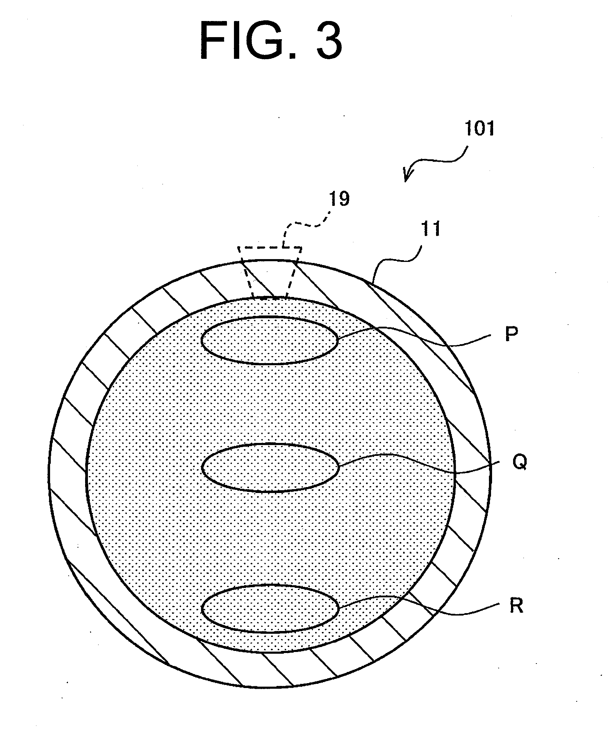

Referring to Fig. 3 showing the cross sectional view of the exhaust gas purification apparatus 101 as taken along the line 3A-3A of Fig. 2, the cross section has a first region P, a second region Q and a third region R. The first region P which is the closest to the injection valve 19 of the three regions has only a little distribution amount of ammonia due to the short distance between the first region P and the injection valve 19. The third region R which is the farthest from the injection valve 19 has more distribution amount of ammonia due to the longer distance between the third region R and the injection valve 19. Thus, NO_{X} content of exhaust gas flowing through the first region P is higher than ammonia content. NO_{X} content of exhaust gas flowing through the third region R is lower than ammonia content. NO_{X} content of exhaust gas flowing through the second region Q is substantially the same as ammonia content.

Referring back to Fig. 2, ammonia contained in exhaust gas flowing downstream of the first region P (refer to Fig. 3) is all used for reduction of NO_{X}, while part of NO_{X} unreacted with ammonia remains in exhaust gas. Thus, exhaust gas which contains such NO_{X} but contains no ammonia flows into the space 17B out of the DPF 13. On the other hand, NO_{X} contained in exhaust gas flowing downstream of the second region Q (refer to Fig. 3) is all reduced by ammonia. Thus, exhaust gas containing no NO_{X} and ammonia flows into the space 17B out of the DPF 13.

NO_{X} contained in exhaust gas flowing downstream of the third region R (refer to Fig. 3) is all reduced by ammonia, while part of ammonia unreacted with NO_{X} remains in exhaust gas. Thus, exhaust gas which contains such ammonia but contains no NO_{X} flows into the space 17B out of the DPF 13. It is noted that remaining ammonia flows into the space 17B without being significantly adsorbed by the first SCR catalyst 15S having a low ammonia adsorption property. Therefore, exhaust gas flowing out of the DPF 13 contains ammonia and NO_{X}. The exhaust gas flowing out of the DPF 13 also contains urea water which is not hydrolyzed in flowing through the space 17A and the DPF 13.

The exhaust gas which has flowed out of the DPF 13 then flows into the second SCR catalyst layer 16 via the space 17B. When the exhaust gas flows through the space 17B, hydrolytic action of urea water remaining in the exhaust gas is promoted by the aid of the heat of exhaust gas and hence urea water is hydrolyzed to ammonia. Thus, almost all urea water remaining in exhaust gas is hydrolyzed to ammonia. Therefore, the urea water injected by the injection valve 19 is hydrolyzed with a high efficiency to ammonia before reaching the second SCR catalyst layer 16.

The flow of exhaust gas passing through the DPF 13 is regulated by the DPF 13. Exhaust gas flowing out of the downstream end face 13B of the DPF 13 contains NO_{X} or ammonia depending on parts of the downstream end face 13B. However, NO_{X} and ammonia contained in exhaust gas and flowing through the space 17B are dispersed by the regulated flow of exhaust gas. Thus, distribution of NO_{X} and ammonia contained in exhaust gas flowing into the second SCR catalyst layer 16 is uniformed in the aforementioned plane corresponding to the cross section of the exhaust gas purification apparatus 101 as taken along the line 3B-3B of Fig. 2. It is noted that the cross section of the exhaust gas purification apparatus 101 along the line 3B-3B of Fig. 2 is parallel to that taken along the line 3A-3A of Fig. 2.

Ammonia contained in exhaust gas flowing into the second SCR catalyst layer 16 then reduces NO_{X} contained in the same exhaust gas by the aid of the second SCR catalyst layer 16. Since NO_{X} and ammonia contained in exhaust gas are distributed uniformly, they react with each other at a high rate or with a high efficiency.

When the amount of ammonia contained in exhaust gas in the second SCR catalyst layer 16 is greater than the amount of ammonia that is necessary for reducing NO_{X} contained in the exhaust gas, the surplus ammonia is adsorbed by the second SCR catalyst 16S having a high ammonia adsorption property. Therefore, ammonia contained in exhaust gas flowing into the second SCR catalyst layer 16 is used for reducing NO_{X} and adsorbed by the second SCR catalyst 16S, so that ammonia is all removed from exhaust gas.

When the amount of NO_{X} contained in exhaust gas in the second SCR catalyst layer 16 is greater than the amount of NO_{X} that is reducible by ammonia contained in the exhaust gas, on the other hand, the surplus NO_{X} which is not reduced by such ammonia is reduced by the ammonia adsorbed by the second SCR catalyst 16S. Therefore, NO_{X} contained in exhaust gas flowing into the second SCR catalyst layer 16 is removed from exhaust gas. Thus, ammonia flowing into the second SCR catalyst layer 16 with exhaust gas is used at a high rate for reducing NO_{X} without flowing out of the second SCR catalyst layer 16 and, therefore, efficiency in the use of ammonia is enhanced.

Exhaust gas having its NO_{X} content reduced and ammonia removed in the second SCR catalyst layer 16 is discharged from the casing 11 or the exhaust gas purification apparatus 101 into the exhaust pipe 6 and then discharged out of the vehicle (not shown) via the exhaust pipe 6 and the muffler 7.

Injection of urea water by the injection valve 19 is performed under a temperature at which the first SCR catalyst 15S and the second SCR catalyst 16S are activated or higher. For example, such activating temperature is 150°C or higher, as mentioned above. Since the temperature of the first SCR catalyst 15S and the second SCR catalyst 16S may be regarded as the temperature of exhaust gas flowing therethrough, the DCU 30 opens the injection valve 19 when the temperature detected by the exhaust-gas temperature sensor 51 is 150°C or higher. The DCU 30 closes the injection valve 19 when the temperature detected by the exhaust-gas temperature sensor 51 is lower than 150°C. Whether or not the NO_{X} reduction should be performed is thus controlled.

The DCU 30 is operable to calculate the flow of NO_{X} per a predetermined period of time from the value of NO_{X} concentration detected by the NO_{X} sensor 52 and also to calculate the amount of ammonia necessary for reducing NO_{X} from the calculated flow of NO_{X} and further to calculate the amount of urea water necessary for producing the calculated amount of ammonia. The DCU 30 causes the injection valve 19 to inject the calculated amount of urea water per the predetermined period of time. Thus, the amount of ammonia produced from urea water is controlled so as not to be supplied excessively relative to the amount of NO_{X} contained in exhaust gas flowing through the casing 11.

If the amount of ammonia contained in exhaust gas flowing into the second SCR catalyst layer 16 is temporarily varied, the second SCR catalyst 16S adsorbs the remaining ammonia or supplements the deficient ammonia with the adsorbed ammonia, thereby suppressing the variation of the amount of ammonia relative to the amount of NO_{X} to be reduced. Thus, ammonia is consumed efficiently by the second SCR catalyst layer 16. In addition, supplying an appropriate amount of urea water that is not excessive for reduction of NO_{X} contained in exhaust gas flowing into the second SCR catalyst layer 16, but can just reduce NO_{X} contained in the exhaust gas, as described above, no excessive amount of ammonia is adsorbed and stored by the second SCR catalyst 16S per a predetermined period of time. Therefore, no ammonia adsorbed by the second SCR catalyst 16S is released therefrom and flows out of the exhaust gas purification apparatus 101, or no surplus amount of ammonia contained in exhaust gas flows out of the exhaust gas purification apparatus 101 without being adsorbed by the second SCR catalyst 16S.

Since the first SCR catalyst 15S has a low ammonia adsorption property, exhaust gas containing NO_{X} and ammonia, the content ratio of which is close to the content ratio of NO_{X} and ammonia that is just necessary for reducing the NO_{X} and calculated by the DCU 30 in accordance with the NO_{X} concentration detected by the NO_{X} sensor 52 flows into the second SCR catalyst 16S. Therefore, reduction reaction between NO_{X} and ammonia contained in exhaust gas flowing through the second SCR catalyst layer 16 is accomplished efficiently. In addition, since the first SCR catalyst 15S has a low ammonia adsorption property, it is easy to predict the amount of ammonia contained in exhaust gas flowing through the second SCR catalyst layer 16 and also easy to control the amount of ammonia adsorbed by the second SCR catalyst layer 16. Thus, the DCU 30 controls the amount of ammonia to be adsorbed by the second SCR catalyst layer 16, thereby meeting the change of the amount of NO_{X} contained in exhaust gas caused by the change of operating conditions of the vehicle (not shown).

If the first SCR catalyst 15S has a higher ammonia adsorption property than the second SCR catalyst 16S, or if the DPF 13 having the first SCR catalyst 15S has a higher ammonia adsorption capacity than the second SCR catalyst layer 16, on the other hand, a great amount of ammonia contained in exhaust gas is adsorbed by the first SCR catalyst 15S of the DPF 13, so that the amount of ammonia contained in exhaust gas flowing into the second SCR catalyst layer 16 is deficient relative to the amount of NO_{X} contained in the same exhaust gas. As a result, the second SCR catalyst layer 16 tends to have a shortage of ammonia in exhaust gas flowing thereinto, and hence the second SCR catalyst layer 16 adsorbs no ammonia. Therefore, the efficiency of purification of exhaust gas by removal of NO_{X} by the second SCR catalyst layer 16 is deficient, with the result that the efficiency of purification of exhaust gas by removal of NO_{X} by the exhaust gas purification apparatus 101 deteriorates.

If the ammonia adsorption capacity of the first SCR catalyst 15S has high dependence on temperature, when the temperature of exhaust gas is increased, that is, when the temperature of the first SCR catalyst 15S is increased, ammonia adsorbed by the first SCR catalyst 15S tends to be released therefrom and hence the amount of ammonia released from the first SCR catalyst 15S is increased with an increase of its temperature. Therefore, the amount of ammonia contained in exhaust gas flowing into the second SCR catalyst layer 16 becomes excessive relative to the amount of NO_{X} contained in the same exhaust gas. Thus, the second SCR catalyst 16S becomes unable to remove all such excessive ammonia by adsorption, so that there is a fear that ammonia is discharged out of the exhaust gas purification apparatus 101 or eventually out of the vehicle (not shown).

Therefore, it is preferable that the first SCR catalyst 15S should have a lower ammonia adsorption property than the second SCR catalyst 16S, that the ammonia adsorption capacity of the entire DPF 13 is lower than that of the entire second SCR catalyst layer 16, and also that the ammonia adsorption capacity of the first SCR catalyst 15S has low dependence on temperature. Urea water is supplied, especially, under a temperature at which the first SCR catalyst 15S and the second SCR catalyst 16S are activated, or higher, for removing NO_{X} contained in exhaust gas thereby to purify exhaust gas, so that it is preferable that the exhaust gas purification apparatus 101 should have the characteristics described just above under such an activation temperature.

The second SCR catalyst 16S uses ammonia adsorbed by itself when it has a shortage of ammonia due to the adsorption and use by the first SCR catalyst 15S. In addition, the second SCR catalyst 16S adsorbs excess ammonia when such excess ammonia flows through the second SCR catalyst 16S due to the release from the first SCR catalyst 15S. To suppress the change of the amount of ammonia flowing through the second SCR catalyst layer 16, the second SCR catalyst 16S should preferably have a high ammonia adsorption property. In addition, the second SCR catalyst layer 16 should preferably have a high ammonia adsorption capacity therethroughout.

Referring to Fig. 1, exhaust gas which is discharged directly from the turbocharger 8 (or from the engine 1) and the temperature of which is decreased only little flows into the exhaust gas purification apparatus 101. Heat of the operating engine 1 is transmitted to the exterior of the casing 11 (refer to Fig. 2) of the exhaust gas purification apparatus 101 located immediately adjacent to the engine 1 and then transmitted further to the interior of the casing 11. Referring to Fig. 2, the interior of the casing 11 is heated by the heat of the exhaust gas discharged directly from the turbocharger 8, as well as by the heat transmitted from the engine 1, so that the interior of the casing 11 tends to be heated easily. Thus, during a cold start of the engine 1, the time for urea water in the casing 11 to reach its hydrolyzing temperature and the time for the first SCR catalyst 15S and the second SCR catalyst 16S to reach their activating temperature are shortened. Therefore, the exhaust gas purification apparatus 101 can start its exhaust gas purifying operation to remove NO_{X} in a short time after the cold start of the engine 1. Consequently, the efficiency of removing NO_{X} is improved.

As described above, the exhaust gas purification apparatus 101 of the present embodiment includes the oxidation catalyst layer 12 provided in a passage through which exhaust gas flows, the first SCR catalyst 15S located in the passage downstream of the oxidation catalyst layer 12, the second SCR catalyst 16S located in the passage downstream of the first SCR catalyst 15S and the injection valve 19 provided for supplying urea water to the passage upstream of the first SCR catalyst 15S. The second SCR catalyst 16S has a high ammonia adsorption capacity than the first SCR catalyst 15S.

Since the second SCR catalyst 16S adsorbs a greater amount of ammonia than the first SCR catalyst 15S, surplus ammonia out of the ammonia produced by the hydrolysis of urea water supplied by the injection valve 19 which has been neither adsorbed by the first SCR catalyst 15S nor used for removing NO_{X} from exhaust gas is adsorbed by the second SCR catalyst 16S. Thus, NO_{X} contained in exhaust gas is removed by the first SCR catalyst 15S and the second SCR catalyst 16S. For example, when the amount of ammonia contained in exhaust gas flowing out of the first SCR catalyst 15S and into the second SCR catalyst 16S is greater than the amount of ammonia necessary for reducing NO_{X} contained in the same exhaust gas, the resulting surplus ammonia is adsorbed by the second SCR catalyst 16S. When the amount of ammonia contained in exhaust gas flowing out of the first SCR catalyst 15S and into the second SCR catalyst 16S is less than the amount of ammonia necessary for reducing NO_{X} contained in the same exhaust gas, on the other hand, NO_{X} is reduced by the ammonia adsorbed in the second SCR catalyst layer 16. Thus, ammonia produced from urea water is used at a high rate for reducing NO_{X} without being discharged out of the exhaust gas purification apparatus 101. Therefore, the exhaust gas purification apparatus 101 improves the efficiency of exhaust gas purification, or the ratio of urea water used for removing NO_{X} contained in exhaust gas relative to urea water usage.

Since the ammonia adsorption capacity per unit volume of the second SCR catalyst 16S is greater than that of the first SCR catalyst 15S, the second SCR catalyst 16S tends to adsorb more ammonia than the first SCR catalyst 15S. Thus, the amount of ammonia adsorbed by the first SCR catalyst 15S or the DPF 13 and the amount of ammonia released from the ammonia adsorbed are small, so that the influence of the first SCR catalyst 15S on the change of the amount of ammonia supplied to the second SCR catalyst layer 16 is also small. Therefore, disposal of ammonia by the second SCR catalyst layer 16 is stabilized and the efficiency in the use of ammonia for removing NO_{X} is enhanced.

The DPF 13 having the first SCR catalyst 15S and the second SCR catalyst layer 16 are spaced away from each other, so that urea water which has not been hydrolyzed is hydrolyzed between the DPF 13 and the second SCR catalyst layer 16 thereby to produce ammonia. Therefore, the efficiency of converting urea water to ammonia is improved and hence the efficiency of purification of exhaust gas by removing NO_{X} contained in exhaust gas relative to urea water usage is also improved. The DPF body 14 is integrated with the first SCR catalyst 15S, so that the exhaust gas purification apparatus 101 can be made in compact. In addition, since the oxidation catalyst layer 12, the first SCR catalyst 15S integrated with the DPF body 14, the second SCR catalyst 16S and the injection valve 19 are provided in one casing 11, the exhaust gas purification apparatus 101 can be made further in compact. In the arrangement wherein the exhaust gas purification apparatus 101 is mounted to the engine assembly 10, high-temperature exhaust gas which is discharged directly from the engine assembly 10 and the temperature of which is decreased only little is flowed into the exhaust gas purification apparatus 101. In addition, the heat generated by the operating engine 1 is transmitted to the interior of the casing 11 of the exhaust gas purification apparatus 101. Thus, during a cold start of the engine 1, the time for urea water in the casing 11 to reach its hydrolyzing temperature and also the time for the first SCR catalyst 15S and the second SCR catalyst 16S to reach their activating temperature are shortened. Therefore, the exhaust gas purification apparatus 101 can start its exhaust gas purifying operation to remove NO_{X} in a short time after the cold start of the engine 1. Consequently, purification efficiency of exhaust gas by removal of NO_{X} is improved.

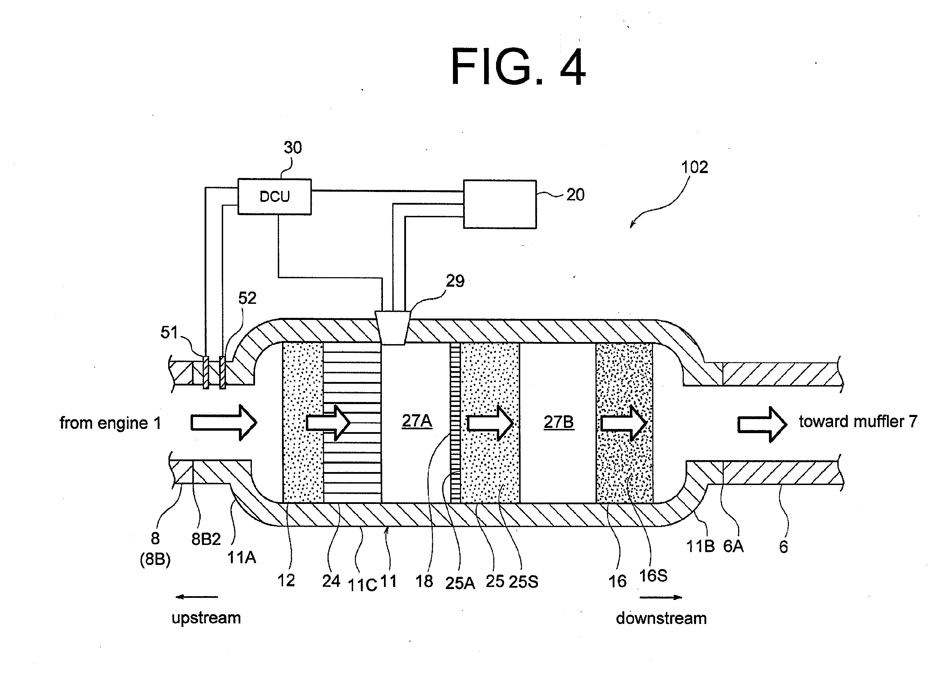

The following will describe the second embodiment of the present invention with reference to Fig. 4. The exhaust gas purification apparatus 102 according to the second embodiment of the present invention differs from the exhaust gas purification apparatus 101 of the first embodiment in that the DPF body 14 and the first SCR catalyst 15S of the exhaust gas purification apparatus 101 according to the first embodiment are provided separately. Specifically, as shown in Fig. 4, the DPF body 24 corresponding to the DPF body 14 of the exhaust gas purification apparatus 101 of the first embodiment is provided upstream of the first SCR catalyst 25S of the first SCR catalyst layer 25 corresponding to the first SCR catalyst 15S of the exhaust gas purification apparatus 101 of the first embodiment. For the sake of convenience of explanation, like or same parts or elements will be referred to by the same reference numerals as those which have been used in the first embodiment, and the description thereof will be omitted.

Referring to Fig. 4 showing the longitudinal sectional view of the exhaust gas purification apparatus 102 according to the second embodiment, as in the case of the first embodiment, the casing 11 of the exhaust gas purification apparatus 102 has therein the oxidation catalyst layer 12, the DPF body 24, the first SCR catalyst layer 25 and the second SCR catalyst layer 16 which are located in this order along the direction of exhaust gas flow. The oxidation catalyst layer 12 and the DPF body 24 adjoin each other, the DPF body 24 and the first SCR catalyst layer 25 are spaced away from each other via a space 27A, and the first SCR catalyst layer 25 and the second SCR catalyst layer 16 are also spaced away from each other via a space 27B. The first SCR catalyst layer 25 is formed of the first SCR catalyst 25S corresponding to the first SCR catalyst 15S of the first embodiment and supported in a substrate (not shown) by any suitable means such as coating as in the case of the second SCR catalyst layer 16 of the first embodiment. Ammonia adsorption capacity of the entire second SCR catalyst layer 16 is higher than that of the entire first SCR catalyst layer 25.

The first SCR catalyst layer 25 has an upstream end face 25A on which the mixer 18 is provided. The injection valve 29 is provided at a position that is closer to the DPF body 24 than to the first SCR catalyst layer 25 between the DPF body 24 and the first SCR catalyst layer 25 for injecting urea water supplied from the urea water tank 20 into the space 27A in the casing 11 that is upstream of the first SCR catalyst 25S.

Exhaust gas introduced into the casing 11 of the exhaust gas purification apparatus 102 flows through the oxidation catalyst layer 12 and then into the DPF body 24 as it is, in which PM contained in exhaust gas is collected. After flowing out of the DPF body 24, the exhaust gas is flowed through the space 27A into which urea water has been injected, the first SCR catalyst layer 25, the space 27B and the second SCR catalyst layer 16 and then discharged out of the exhaust gas purification apparatus 102. Chemical reactions such as oxidation, reduction and hydrolysis taking place for the components and substances in exhaust gas flowing through the first SCR catalyst layer 25, the space 27B and the second SCR catalyst layer 16 in the second embodiment are substantially the same as in the case of the first embodiment.

Although the combustion of the PM collected in the DPF body 24 is regularly performed, the first SCR catalyst layer 25 is not directly affected by the heat due to such combustion. The rest of the structure of the second embodiment is substantially the same as that of the first embodiment, and the description thereof will be omitted.

The exhaust gas purification apparatus 102 of the second embodiment offers substantially the same effects as that of the first embodiment. The casing 11 of the exhaust gas purification apparatus 102 has therein the DPF body 24 which is located upstream of the first SCR catalyst layer 25. Since the DPF body 24 and the first SCR catalyst layer 25 are provided separately, the first SCR catalyst 25S is prevented from being directly affected by the heat due to the combustion of the PM collected in the DPF body 24. Therefore, the durability of the first SCR catalyst 25S is improved. The DPF body 24, which is located upstream of the injection valve 29 in the second embodiment, may be located downstream of the injection valve 29, or located between the injection valve 29 and the first SCR catalyst layer 25.

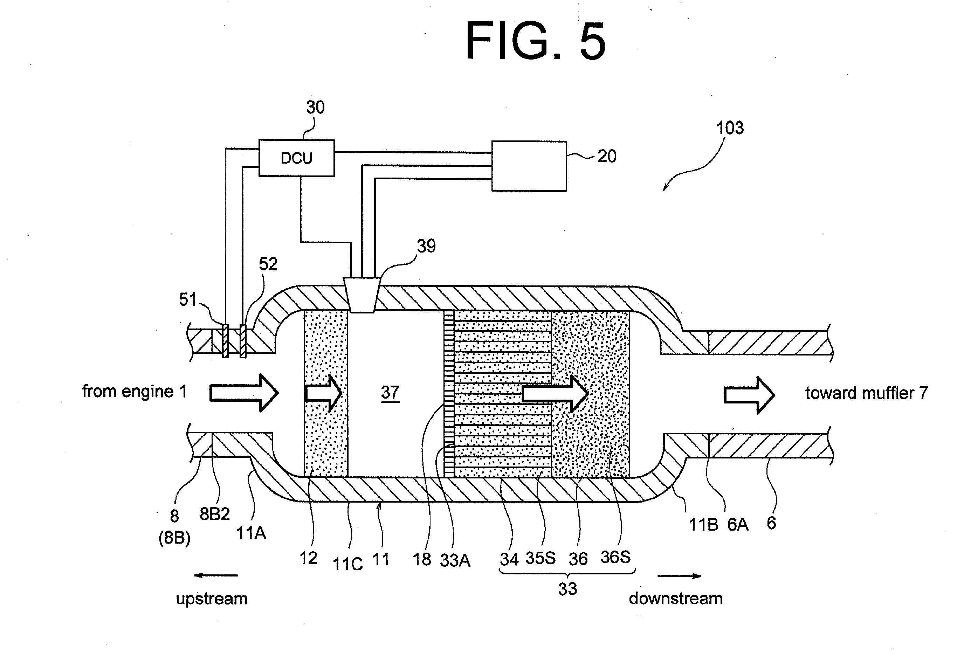

The following will describe the third embodiment of the present invention with reference to Fig. 5. The exhaust gas purification apparatus 103 according to the third embodiment of the present invention differs from the exhaust gas purification apparatus 101 of the first embodiment in that the space 17B between the DPF 13 and the second SCR catalyst layer 16 of the exhaust gas purification apparatus 101 of the first embodiment is omitted. Specifically, the DPF body 34 which supports therein the first SCR catalyst 35S and the second SCR catalyst layer 36 adjoin each other to be integrated together, as shown in Fig. 5.

Referring to Fig. 5 showing the longitudinal sectional view of the exhaust gas purification apparatus 103 according to the third embodiment, as in the case of the first embodiment, the casing 11 of the exhaust gas purification apparatus 103 has therein the oxidation catalyst layer 12, the DPF body 34 and the second SCR catalyst layer 36 which are located in this order along the direction of exhaust gas flow. The oxidation catalyst layer 12 and the DPF body 34 are spaced away from each other via a space 37, and the DPF body 34 and the second SCR catalyst layer 36 adjoin each other. The first SCR catalyst 35S corresponding to the first SCR catalyst 15S of the first embodiment is supported in the DPF body 34 by any suitable means such as coating. In addition, the second SCR catalyst layer 36 is formed of the second SCR catalyst 36S supported in a substrate (not shown) by any suitable means such as coating as in the case of the second SCR catalyst layer 16 of the first embodiment. Ammonia adsorption capacity of the entire second SCR catalyst layer 36 is higher than that of the entire DPF body 34 supporting therein the first SCR catalyst 35S.

The DPF body 34 supporting therein the first SCR catalyst 35S and the second SCR catalyst layer 36 are integrated together thereby to form a DPF 33 with catalyst. The DPF 33 has an upstream end face 33A on which the mixer 18 is provided. The injection valve 39 is provided at a position that is closer to the oxidation catalyst layer 12 than to the DPF 33 between the oxidation catalyst layer 12 and the DPF 33 for injecting urea water supplied from the urea water tank 20 into the space 37 in the casing 11 that is upstream of the first SCR catalyst 35S.

Exhaust gas introduced into the casing 11 of the exhaust gas purification apparatus 103 flows through the oxidation catalyst layer 12 into the space 37, in which urea water is added, and then flows into the DPF 33. PM contained in exhaust gas flowed into the DPF 33 through the DPF body 34 is collected by the DPF body 34. In addition, NO_{X} contained in exhaust gas is removed by ammonia contained in the same exhaust gas under the action of the first SCR catalyst 35S supported in the DPF body 34. The exhaust gas flowed out of the DPF body 34 then flows into the second SCR catalyst layer 36 as it is, in which NO_{X} contained in exhaust gas is removed by ammonia contained in the same exhaust gas under the action of the second SCR catalyst 36S. The exhaust gas flowed out of the second SCR catalyst layer 36 is discharged out of the exhaust gas purification apparatus 103. Chemical reactions such as oxidation, reduction and hydrolysis taking place for the components and substances in exhaust gas flowing through the DPF body 34 supporting therein the first SCR catalyst 35S and the second SCR catalyst layer 36 in the third embodiment are substantially the same as in the case of the first embodiment.

Any urea water which has not been hydrolyzed in exhaust gas flowing through the DPF body 34 of the DPF 33 flows as it is into the second SCR catalyst layer 36. Since all the urea water is not hydrolyzed, there is a fear that the amount of ammonia contained in exhaust gas flowing into the second SCR catalyst layer 36 may be deficient relative to the amount of NO_{X} contained in the same exhaust gas. In order to prevent such deficiency of ammonia, ammonia adsorption property of the second SCR catalyst 36S and ammonia adsorption capacity of the second SCR catalyst layer 36 should preferably be higher than those of the second SCR catalyst 16S and the second SCR catalyst layer 16 of the first embodiment. The rest of the structure of the third embodiment is substantially the same as that of the first embodiment, and the description thereof will be omitted.

Thus, the exhaust gas purification apparatus 103 of the third embodiment offers substantially the same effects as that of the first embodiment. The casing 11 of the exhaust gas purification apparatus 103 has therein the DPF body 34, which has the first SCR catalyst 35S and is adjacently integrated with the second SCR catalyst 36S. Therefore, the casing 11 may be made in compact and the exhaust gas purification apparatus 103 may be made in compact, accordingly.

Although in the first through third embodiments each of the exhaust gas purification apparatuses 101-103 is mounted to the engine assembly 10 having the turbocharger 8, the present invention is not limited to such structure. When the engine assembly dispenses with the turbocharger 8, each of the exhaust gas purification apparatuses 101-103 may be directly connected to the outlet 5A of the exhaust manifold 5. Each of the exhaust gas purification apparatuses 101-103 may be provided at a position distant from the engine assembly 10.

Although in the first through third embodiments the casing 11 of the exhaust gas purification apparatuses 101-103 is formed of a cylindrical shape, it may be formed of a prism shape such as a quadratic prism, a spherical shape or an ellipsoidal shape. The exhaust gas purification apparatuses 101-103 of the first through third embodiments may dispense with the mixer 18. Although in the first and second embodiments the first SCR catalysts 15S, 25S and the second SCR catalyst 16S are provided in one casing 11, the present invention is not limited to such structure. Any of the first SCR catalysts 15S, 25S and the second SCR catalyst 16S may be provided out of the casing 11. The distance between the first SCR catalysts 15S, 25S and the second SCR catalyst 16S should preferably be set so that activation of the second SCR catalyst 16S is not decreased by a drop in temperature of the exhaust gas flowing through the first SCR catalysts 15S, 25S and the second SCR catalyst 16S. Although in the first through third embodiments the second SCR catalysts 16S, 36S have higher ammonia adsorption property than the first SCR catalysts 15S, 25S, 35S, this is not an essential requirement of the present invention. It may be so arranged that ammonia adsorption capacity of the entire second SCR catalyst layer which supports therein the second SCR catalysts 16S, 36S is higher than that of the entire DPF body or the entire first SCR catalyst layer which supports therein the first SCR catalysts 15S, 25S, 35S.

The exhaust gas purification apparatus includes an oxidation catalyst, a first selective catalytic reduction catalyst, a second selective catalytic reduction catalyst and a urea water supply device. The oxidation catalyst is provided in a passage through which exhaust gas flows. The first selective catalytic reduction catalyst is located in the passage downstream of the oxidation catalyst. The second selective catalytic reduction catalyst is located in the passage downstream of the first selective catalytic reduction catalyst and operable to adsorb more ammonia than the first selective catalytic reduction catalyst. The urea water supply device is provided for supplying urea water to the passage upstream of the first selective catalytic reduction catalyst.

## Claims

1. An exhaust gas purification apparatus (101, 102, 103) comprising:
an oxidation catalyst (12) provided in a passage through which exhaust gas flows;
a first selective catalytic reduction catalyst (15S, 25S, 35S) located in the passage downstream of the oxidation catalyst (12); and
a urea water supply device (19, 29, 39) for supplying urea water to the passage upstream of the first selective catalytic reduction catalyst (15S, 25S, 35S),
**characterized in that** a second selective catalytic reduction catalyst (16S, 36S) is located in the passage downstream of the first selective catalytic reduction catalyst (15S, 25S, 35S) and operable to adsorb more ammonia than the first selective catalytic reduction catalyst (15S, 25S, 35S).

2. The exhaust gas purification apparatus (101, 102, 103) according to claim 1, **characterized in that** ammonia adsorption capacity per unit volume of the second selective catalytic reduction catalyst (16S, 36S) is higher than ammonia adsorption capacity per unit volume of the first selective catalytic reduction catalyst (15S, 25S, 35S).

3. The exhaust gas purification apparatus (101, 102, 103) according to claim 1 or 2, **characterized in that** the first selective catalytic reduction catalyst (15S, 25S, 35S) is made of an oxide of zirconium, titanium, silicon, cerium or tungsten, or ZSM-5 zeolite which is partially replaced by iron or copper which is thermally treated, wherein the second selective catalytic reduction catalyst (16S, 36S) is made of ZSM-5 zeolite which is partially replaced by iron or copper which are thermally treated.

4. The exhaust gas purification apparatus (101, 102, 103) according to claim 3, **characterized in that** the first selective catalytic reduction catalyst (15S, 25S, 35S) and the second selective catalytic reduction catalyst (16S, 36S) are made of the ZSM-5 zeolite, wherein a temperature of the thermal treatment of iron or copper which partially replaces the ZSM-5 zeolite of the second selective catalytic reduction catalyst (16S, 36S) is lower than a temperature of the thermal treatment of iron or copper which partially replaces the ZSM-5 zeolite of the first selective catalytic reduction catalyst (15S, 25S, 35S).

5. The exhaust gas purification apparatus (101, 102) according to any one of claims 1 through 4, **characterized in that** the first selective catalytic reduction catalyst (15S, 25S) is spaced away from the second selective catalytic reduction catalyst (16S).

6. The exhaust gas purification apparatus (103) according to any one of claims 1 through 4, **characterized in that** the first selective catalytic reduction catalyst (35S) adjoins the second selective catalytic reduction catalyst (36S).

7. The exhaust gas purification apparatus (101, 103) according to any one of claims 1 through 6, **characterized in that** the exhaust gas purification apparatus (101, 103) further comprises a particulate matter collecting device (14, 34) for collecting particulate matter, wherein the particulate matter collecting device (14, 34) is integrated with the first selective catalytic reduction catalyst (15S, 35S).

8. The exhaust gas purification apparatus (102) according to any one of claims 1 through 5, **characterized in that** the exhaust gas purification apparatus (101, 103) further comprises a particulate matter collecting device (24) for collecting particulate matter, wherein the particulate matter collecting device (24) is located upstream of the first selective catalytic reduction catalyst (25S).

9. The exhaust gas purification apparatus (101, 102, 103) according to any one of claims 1 through 8, **characterized in that** the exhaust gas purification apparatus (101, 102, 103) is mounted to an engine assembly (10).

10. The exhaust gas purification apparatus (101, 102, 103) according to any one of claims 1 through 9, **characterized in that** the exhaust gas purification apparatus (101, 103) further comprises a cylindrical casing (11) having therein the oxidation catalyst (12), the first selective catalytic reduction catalyst (15S, 25S, 35S) and the second selective catalytic reduction catalyst (16S, 36S), wherein the casing (11) is provided with an injection valve that serves as the urea water supply device (19, 29, 39) for injecting the urea water into a space (17A, 27A, 37) in the casing (11) that is upstream of the first selective catalytic reduction catalyst (15S, 25S, 35S).
